# EUROPEAN PATENT APPLICATION

(11) **EP 4 112 154 A1**
(43) Date of publication of application: **04.01.2023**
(21) Application number: 21863988.8
(22) Date of filing: 28.07.2021
(51) Int. Cl.: B01D 53/14, B01D 53/18, B01D 53/50, B01D 53/78, B01D 53/92, B01D 53/96, F01N 3/02, F01N 3/18

(54) **EXHAUST GAS TREATMENT APPARATUS AND EXHAUST GAS TREATMENT METHOD FOR EXHAUST GAS TREATMENT APPARATUS**

(30) Priority: 04.09.2020 JP 2020148843
(71) Applicant: Fuji Electric Co., Ltd., Kawasaki-shi, Kanagawa 210-9530 (JP)
(72) Inventor: TOUYAMA, Hiroyuki, Kawasaki-shi, Kanagawa 210-9530 (JP); YASUDA, Keigo, Kawasaki-shi, Kanagawa 210-9530 (JP); ITOKAWA, Kazuyoshi, Kawasaki-shi, Kanagawa 210-9530 (JP)
(74) Representative: MERH-IP Matias Erny Reichl Hoffmann Patentanwälte PartG mbB
(86) International application number: PCT/JP2021/027828
(87) International publication number: WO 2022/049930

(57) **Abstract**

To enable side products and soot coagulating on a configuration such as a circulation pathway or the like for a closed loop operation to be prevented from remaining. A scrubber (10) that obtains, as drainage water (a3), exhaust gas washing water (a1) that has absorbed a sulfur oxide, a supply pathway (20) that supplies the exhaust gas washing water to the scrubber, an introduction pathway (50) into which the drainage water from the scrubber is introduced, a drainage water treatment device (60) that performs a predetermined treatment on the drainage water from the introduction pathway, a circulation pathway (70) that supplies, as circulated water (a2) the drainage water treated by the drainage water treatment device to a supply pipe, valves (31, 75) that performs switching between supply of the exhaust gas washing water from the water supply pathway (30) and supply of the circulated water from the circulation pathway for the supply pathway, and a bypass pathway (80) that is caused to communicate with a side further upstream than the valves in the circulation pathway and an upstream side of the introduction pathway are included. It is possible to form a closed pathway with the introduction pathway, the circulation pathway, and the like for the closed loop operation via the bypass pathway and to wash the closed pathway with circulated washing water (a4) during the open loop operation.

## Description

### [Technical Field]

The present invention relates to an exhaust gas treatment apparatus and an exhaust gas treatment method for an exhaust gas treatment apparatus for purifying exhaust gas of an engine or the like.

### [Background Art]

There is a so-called hybrid-type exhaust gas treatment apparatus for a ship capable of switching an open loop operation and a closed loop operation as disclosed in Patent Literature 1. In the open loop operation, washing water taken from the outside of a ship body is used in a desulfurization tower adapted to desulfurize exhaust gas and is then discharged to the outside of the ship body. In the closed loop operation, washing water used in the desulfurization tower is made to serve as circulated water circulated after being subjected to a predetermined treatment inside the ship body and is repeatedly used for desulfurization in the desulfurization tower.

### [Citation List]

### [Patent Literature]

[Patent Literature 1]: International Publication No. WO 2019/230641

### [Summary of Invention]

### [Technical Problem]

In a case in which the closed loop operation is performed and is then switched to the open loop operation in the aforementioned configuration, the circulated water is discharged to the outside of the ship. Therefore, a circulation pathway or the like for circulated water used only for the closed loop operation is made to wait in an empty state with the circulated water drained therefrom after the closed loop operation ends.

Here, side products such as sulfate ions generated through desulfurization in the desulfurization tower and soot particles are contained at high concentration in the circulated water used in the closed loop operation. Therefore, in a case in which the circulated water is drained from the circulation pathway for the closed loop operation, there is a problem that a small amount of circulated water remaining therein is evaporated and side products and soot precipitate and coagulate on the inner surface of the circulation pathway.

The present invention was made in view of such a point, and an object thereof is to provide an exhaust gas treatment apparatus and an exhaust gas treatment method for an exhaust gas treatment apparatus capable of preventing side products and soot coagulating on a configuration such as a circulation pathway for a closed loop operation from remaining.

### [Solution to Problem]

An exhaust gas treatment apparatus according to the present invention includes: a scrubber that brings a sulfur oxide contained in exhaust gas into contact with exhaust gas washing water, purifies the exhaust gas to obtain purified gas, and obtains, as drainage water, the exhaust gas washing water which has absorbed the sulfur oxide; a supply pathway that supplies the exhaust gas washing water to the scrubber; a water supply pathway that supplies the exhaust gas washing water from outside of the apparatus to the supply pathway; an introduction pathway into which the drainage water from the scrubber is introduced; a drainage water treatment device that performs a predetermined treatment on the drainage water from the introduction pathway; a circulation pathway that supplies, as circulated water, the drainage water treated by the drainage water treatment device to the supply pathway; a discharge pathway that is for discharging the drainage water to the outside of the apparatus; a first switching unit that performs switching between supply of the exhaust gas washing water from the water supply pathway and supply of the circulated water from the circulation pathway for the supply pathway; and a second switching unit that switches a flow of the drainage water to the outside of the apparatus in the discharge pathway, and the apparatus further includes a bypass pathway that is caused to communicate with a side further upstream than the first switching unit in the circulation pathway and an upstream side of the introduction pathway, such that circulated washing water flows therethrough.

An exhaust gas treatment method for an exhaust gas treatment apparatus according to the present invention includes, in the aforementioned exhaust gas treatment apparatus: performing a closed loop operation of purifying exhaust gas with the scrubber in a state in which the circulated water is supplied from the circulation pathway to the supply pathway via the first switching unit and a flow of the drainage water to the outside of the apparatus in the discharge pathway is stopped via the second switching unit; and performing a washing circulation operation of circulating the circulated washing water in the closed pathway formed by the bypass pathway, the introduction pathway, the drainage water treatment device, and the circulation pathway after the closed loop operation is performed.

### [Advantageous Effects of Invention]

According to the present invention, it is possible to perform switching between the open loop operation and the closed loop operation through switching of each switching unit. Also, it is possible to form a pathway that communicates the downstream side of the circulation pathway with the upstream side of the introduction pathway with the bypass pathway, in other words, a pathway that provides communication with the bypass pathway to bypass the scrubber instead of the scrubber. It is thus possible to form the closed pathway used in the closed loop operation by the bypass pathway instead of the scrubber and to perform washing by causing the circulated washing water to flow through such a closed pathway. As a result, it is possible to prevent side products and soot from coagulating and remaining in the circulation pathway and the like for the closed loop operation after the closed loop operation is performed.

### [Brief Description of Drawings]

[Figure 1] Figure 1 is an overview configuration diagram of an exhaust gas treatment apparatus according to a first embodiment.
[Figure 2] Figure 2A is a time chart at the time of operation switching in the first embodiment, and Figure 2B is a time chart similar to Figure 2A in a conventional structure.
[Figure 3] Figure 3 is a configuration diagram similar to Figure 1 for explaining a pathway through which circulated washing water flows.
[Figure 4] Figure 4 is a graph illustrating a relationship between the flow amount of the circulated washing water and a time.
[Figure 5] Figure 5 is an overview configuration diagram of an exhaust gas treatment apparatus according to a second embodiment.
[Figure 6] Figure 6 is a configuration diagram similar to Figure 1 for an exhaust gas treatment apparatus according to a first modification.
[Figure 7] Figure 7 is a configuration diagram similar to Figure 1 for an exhaust gas treatment apparatus according to a second modification.

### [Description of Embodiments]

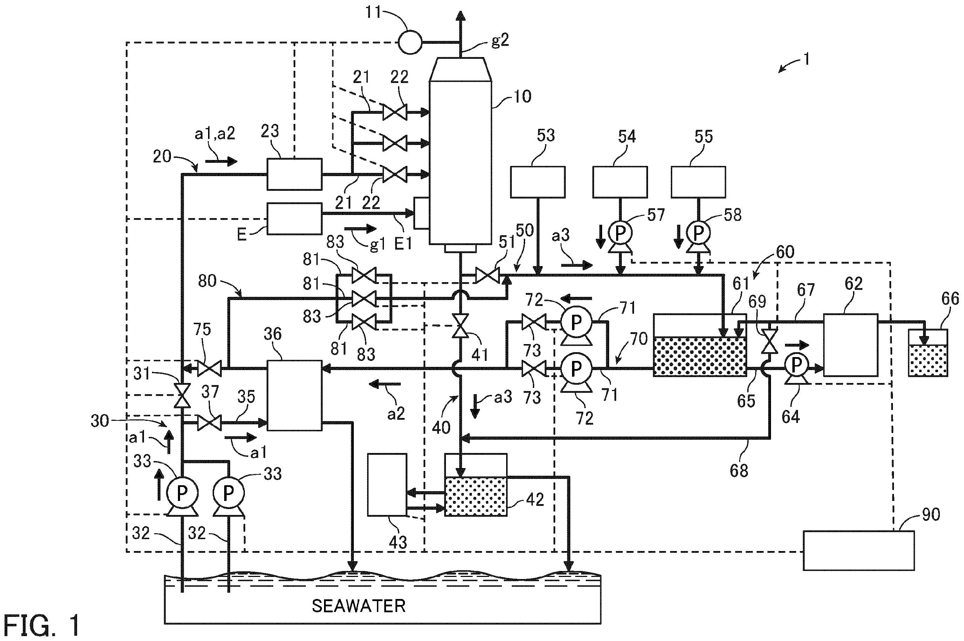

Hereinafter, embodiments of the present invention will be described in detail with reference to the accompanying drawings. Figure 1 is an overview configuration diagram of an exhaust gas treatment apparatus according to a first embodiment. Note that as the exhaust gas treatment apparatus according to the present embodiment, an apparatus that purifies exhaust gas discharged from an engine used in a ship will be considered. However, the exhaust gas treatment apparatus according to the present embodiment is not limited thereto and can be applied to treatments of exhaust gas in a thermal power plant, a chemical industrial plant, and a waste incineration facility.

As illustrated in Figure 1, an exhaust gas treatment apparatus 1 includes a scrubber 10 into which exhaust gas g1 is introduced from an engine E through an exhaust gas pipe E1, a supply pathway 20 that supplies exhaust gas washing water a1 or circulated water a2, which will be described later, to the scrubber 10, and a water supply pathway 30 that supplies seawater from ocean, which corresponds to the outside of the exhaust gas treatment apparatus 1, as the exhaust gas washing water a1 to the supply pathway 20. SO₂ (sulfur dioxide) which is a sulfur oxide is contained in the exhaust gas g1 to be introduced into the scrubber 10. Note that in a case in which the exhaust gas treatment apparatus 1 according to the present embodiment is applied to various plants and the like, a boiler may be used instead of the engine E.

The exhaust gas washing water a1 and the circulated water a2 introduced into the scrubber 10 are sprayed by a plurality of nozzles (not illustrated) and are brought into gas-liquid contact with the exhaust gas g1 moving upward inside the scrubber 10. SO₂ in the exhaust gas g1 is absorbed and removed by the exhaust gas washing water a1 and the circulated water a2. Therefore, the exhaust gas g1 becomes purified gas g2 purified in the scrubber 10 and is then discharged from an upper portion of the scrubber 10 to the atmosphere.

A gas analyzer 11 is mounted on the scrubber 10 on a side of an exit of the purified gas g2. The gas analyzer 11 is configured of a laser-type gas analyzer or the like and measures SO₂ concentration in the purified gas g2 passing through the scrubber 10.

The exhaust gas washing water a1 and the circulated water a2 that have absorbed SO₂ become drainage water a3 in the scrubber 10, fall along an inner wall surface of the scrubber 10 due to their own weights, and are retained on the lower side.

The supply pathway 20 includes branched pipes 21 branched into a plurality of pipes in a stage before introduction into the scrubber 10, and each of such branched pipes 21 is provided with a valve 22. The supply pathway 20 is provided to be able to adjust the flow amounts of the exhaust gas washing water a1 and the like to the scrubber 10 through opening and closing of the valves 22 in the plurality of branched pipes 21.

A flowmeter 23 is provided on a side further upstream than the branched position of the branched pipes 21 in the supply pathway 20. The flowmeter 23 is configured of a mass flowmeter or the like and is provided to be able to measure and output the flow amounts of the exhaust gas washing water a1 and the circulated water a2 flowing through the supply pathway 20.

A valve 31 is provided between the supply pathway 20 and the water supply pathway 30. In other words, the side further downstream than the valve 31 is caused to serve as the supply pathway 20, and the upstream side is caused to serve as the water supply pathway 30. The valve 31 enables switching of supply and a stop of the exhaust gas washing water a1 from the water supply pathway 30 to the supply pathway 20.

The water supply pathway 30 includes branched pipes 32 branched on the upstream side, and each of such branched pipes 32 is provided with a seawater pump 33. The water supply pathway 30 is provided to be able to adjust the flow amount of the exhaust gas washing water a1 to be supplied via activation of the seawater pumps 33 in the plurality of branched pipes 32.

A cooling pipe 35 is branched from the water supply pathway 30 on a side further upstream than the valve 31, and the cooling pipe 35 supplies the exhaust gas washing water a1 that is seawater to a heat exchanger 36. The heat exchanger 36 uses the supplied exhaust gas washing water a1 as cooling water and then releases the water to the ocean. A valve 37 capable of adjusting the flow amount of the exhaust gas washing water a1 is provided in the cooling pipe 35 on a side further upstream than the heat exchanger 36.

The exhaust gas treatment apparatus 1 further includes a discharge pathway 40 and an introduction pathway 50 into which the drainage water a3 from the scrubber 10 is introduced, a drainage water treatment device 60 provided on the downstream side of the introduction pathway 50, and a circulation pathway 70 that connects the drainage water treatment device 60 to the supply pathway 20.

The discharge pathway 40 and the introduction pathway 50 are provided in a branched manner in the vicinity of an exit for the drainage water a3 of the scrubber 10. A valve 41 is provided on the upstream side of the discharge pathway 40, such that introduction and a stop of introduction of the drainage water a3 into the discharge pathway 40 can be switched through opening and closing of the valve 41. Also, a valve 51 is also provided on the upstream side of the introduction pathway 50, such that introduction and a stop of introduction of the drainage water a3 into the introduction pathway 50 can be switched through opening and closing of the valve 51.

The discharge pathway 40 is selected as a discharge destination of the drainage water a3 by blocking the valve 51 in the introduction pathway 50 while opening the valve 41 in the discharge pathway 40. On the other hand, the introduction pathway 50 is selected as a discharge destination of the drainage water a3 by opening the valve 51 in the introduction pathway 50 while blocking the valve 41 in the discharge pathway 40. Therefore, it is possible to switch the discharge destination of the drainage water a3 to any one of the discharge pathway 40 and the introduction pathway 50 and to switch the flow of the drainage water a3 to the outside of the apparatus in the discharge pathway 40 with the two valves 41 and 51. Here, the two valves 41 and 51 configure a second switching unit.

The discharge pathway 40 is provided to discharge the drainage water a3 to the ocean which corresponds to the outside of the exhaust gas treatment apparatus 1. Specifically, the discharge pathway 40 retains the drainage water a3 of the scrubber 10 in a gas seal chamber 42 and then discharges the drainage water a3 to the ocean. A pH value and the like of the drainage water a3 retained in the gas seal chamber 42 are measured by a water quality meter 43.

The introduction pathway 50 introduces the drainage water a3 from the scrubber 10 into a buffer tank 61 of the drainage water treatment device 60. Here, a circulated washing water supply unit 53, a detergent supply unit 54, and an alkali chemical supply unit 55 are connected to the introduction pathway 50.

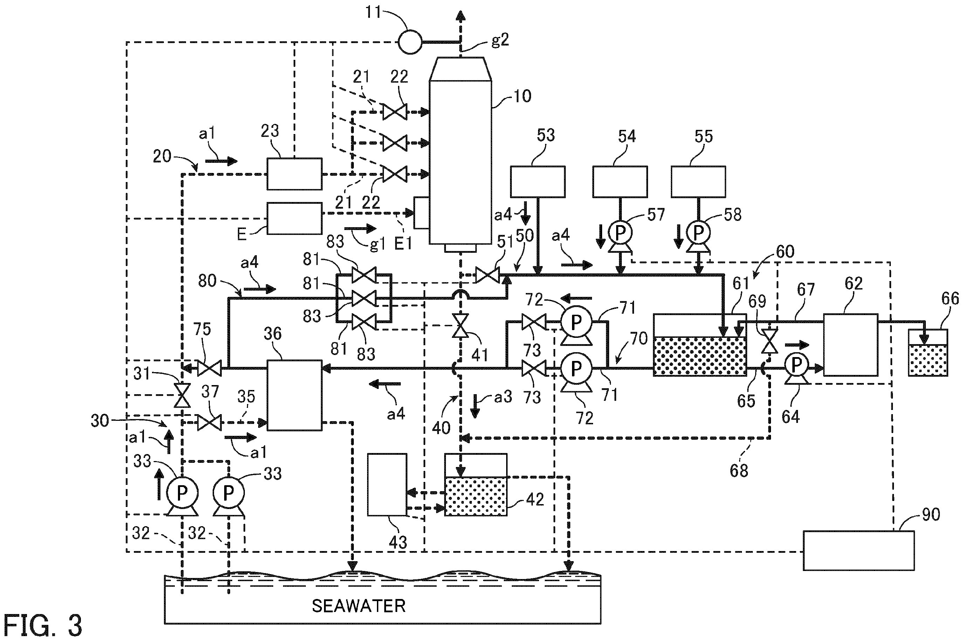

The circulated washing water supply unit 53 is provided to be able to supply circulated washing water a4 (see Figure 3) which is seawater or clear water into the introduction pathway 50. In a case in which the circulated washing water supply unit 53 supplies seawater as the circulated washing water a4, an example in which a pipe branched from the water supply pathway 30 is connected to the introduction pathway 50, or a pathway that is independent from the water supply pathway 30 is provided with a pump to supply seawater to the introduction pathway 50 can be illustrated. Also, the circulated washing water supply unit 53 may include a tank for retaining seawater or clear water in the ship and supply the seawater or the clear water from the tank to the introduction pathway 50.

The detergent supply unit 54 is provided to be able to supply, as a detergent, a component that can easily dissolve and remove side products and soot coagulating in the introduction pathway 50, the circulation pathway 70, and the like, for example, a hydrochloric acid to the introduction pathway 50. A pump 57 is provided in a pipe that connects the detergent supply unit 54 to the introduction pathway 50, and the amount of detergent to be supplied is adjusted by controlling driving of the pump 57.

The alkali chemical supply unit 55 is provided to be able to supply an alkali chemical to the introduction pathway 50. Examples of the alkali chemical can include an aqueous NaOH solution diluted to predetermined concentration, an Mg(OH)₂ slurry solution, a Ca(OH)₂ slurry solution, and a CaCO₃ slurry solution, and one of these may be used alone, or mixtures of a plurality of combinations may be used. A pump 58 is provided in a pipe that connects the alkali chemical supply unit 55 to the introduction pathway 50, and the amount of alkali chemical to be supplied is adjusted by controlling driving of the pump 58.

The drainage water treatment device 60 includes the buffer tank 61, a water treatment device 62, and a pipe 65 that feeds the drainage water a3 from the buffer tank 61 to the water treatment device 62 via a pump 64.

The water treatment device 62 performs, as a predetermined treatment, a treatment of improving water quality by performing removal or the like of soot contained in the drainage water a3. Sludge collected as aggregates after the treatment of the water treatment device 62 is retained in a sludge tank 66.

The drainage water a3 treated by the water treatment device 62 is supplied as the circulated water a2 from a pipe 67 to the circulation pathway 70 via the buffer tank 61. Here, a pipe 68 branched at an intermediate portion of the pipe 67 and connected to the discharge pathway 40 is provided, such that the drainage water a3 treated by the water treatment device 62 can be released to the ocean through the gas seal chamber 42 without being returned to the buffer tank 61. A valve 69 is provided on the upstream side of the pipe 68, such that supply and a stop of the treated drainage water a3 to the gas seal chamber 42 can be switched through opening and closing of the valve 69.

The circulation pathway 70 is connected, on the upstream side thereof, to the buffer tank 61 and is connected, on the downstream side thereof, to the vicinity of the valve 31 in the supply pathway 20 after passing through the heat exchanger 36. The circulation pathway 70 includes a plurality of (two in the present embodiment) parallel pipes 71 branched at an intermediate position and then combined. Also, the circulation pathway 70 further includes a circulation pump 72 and a valve 73 provided in each parallel pipe 71.

The circulated water a2 flowing through the circulation pathway 70 is cooled through passing through the heat exchanger 36. A valve 75 is provided on the downstream side of the circulation pathway 70, such that supply and a stop of the circulated water a2 from the circulation pathway 70 to the supply pathway 20 can be switched through opening and closing of the valve 75.

The circulated water a2 is supplied from the circulation pathway 70 to the supply pathway 20 by opening the valve 75 in the circulation pathway 70 while blocking the valve 31 between the water supply pathway 30 and the supply pathway 20. On the other hand, the exhaust gas washing water a1 is supplied from the water supply pathway 30 to the supply pathway 20 by blocking the valve 75 in the circulation pathway 70 while opening the valve 31 between the water supply pathway 30 and the supply pathway 20. Therefore, it is possible to perform switching between the supply of the exhaust gas washing water a1 from the water supply pathway 30 and the supply of the circulated water a2 from the circulation pathway 70 for the supply pathway 20 with the two valves 31 and 75. Here, the two valves 31 and 75 configure a first switching unit.

The exhaust gas treatment apparatus 1 further includes a bypass pathway 80 that is caused to communicate with the side further upstream than the valve 75 in the circulation pathway 70 and between the valve 51 and the circulated washing water supply unit 53 that corresponds to the upstream side of the introduction pathway 50. The bypass pathway 80 includes a plurality of (three in the present embodiment) parallel pipes 81 branched at an intermediate position and then combined. Also, the bypass pathway 80 further includes a valve 83 provided in each parallel pipe 81.

The exhaust gas treatment apparatus 1 includes a control device 90. The control device 90 is configured of, for example, a programmable controller (PLC) including a processor that executes various kinds of processing required to control a plurality of operations, which will be described later, and a storage medium such as a read only memory (ROM) and a random access memory (RAM). The control device 90 is connected to each of the valves 22, 31, 37, 41, 51, 69, 73, 75, and 83, each of the pumps 33, 57, 58, 64, and 72, the gas analyzer 11, the flowmeter 23, the water quality meter 43, and the engine E via predetermined signal lines (illustrated by dashed lines). The control device 90 performs opening and closing control of each of the valves 22, 31, 37, 41, 51, 69, 73, 75, and 83 and drive control of each of the pumps 33, 57, 58, 64, and 72.

The exhaust gas treatment apparatus 1 in the present embodiment is of a so-called hybrid type capable of switching an open loop operation and a closed loop operation. In the open loop operation, the exhaust gas washing water a1 is pumped up from the ocean and is sprayed in the scrubber 10, and the drainage water a3 used for desulfurization of the exhaust gas g1 in the scrubber 10 is released to the ocean. In the closed loop operation, the drainage water a3 used for desulfurization of the exhaust gas g1 is subjected to a predetermined treatment to obtain the circulated water a2 and is then repeatedly used for desulfurization in the scrubber 10. The open loop operation and the closed loop operation of the exhaust gas treatment apparatus 1 will be described below.

In the open loop operation, the valves 22, 31, and 41 are opened, the valves 51 and 75 are blocked, and the seawater pump 33 is driven, via the control performed by the control device 90. In this manner, the exhaust gas washing water a1 is supplied from the water supply pathway 30 to the supply pathway 20.

Also, the exhaust gas washing water a1 is introduced into the scrubber 10 via the branched pipes 21 of the supply pathway 20, and the introduced exhaust gas washing water a1 is sprayed by the plurality of nozzles (not illustrated) in the scrubber 10. In this manner, this manner, the exhaust gas washing water a1 is brought into gas-liquid contact with the exhaust gas g1 moving upward inside the scrubber 10, and SO₂ in the exhaust gas g1 is absorbed and purified by the exhaust gas washing water a1.

The exhaust gas washing water a1 absorbing SO₂ is caused to serve as the drainage water a3 inside the scrubber 10 and is then retained on the lower side of the scrubber 10. Then, the drainage water a3 inside the scrubber 10 is released to the ocean through the discharge pathway 40.

In a case in which the open loop operation is switched to the closed loop operation, the valves 22, 51, 73, and 75 are opened, the valves 31, 41, 69, and 83 are blocked, and the pumps 64 and 72 are driven. In this manner, the supply of the exhaust gas washing water a1 to the supply pathway 20 from the water supply pathway 30 is stopped, and the circulated water a2 is supplied from the circulation pathway 70. Also, the introduction of the drainage water a3 from the scrubber 10 to the discharge pathway 40 is stopped, and the drainage water a3 into the introduction pathway 50 is introduced.

An alkali chemical is supplied from the alkali chemical supply unit 55 to the drainage water a3 introduced into the introduction pathway 50 through driving of the pump 58 as needed, and the drainage water a3 causes a neutralization reaction. The drainage water a3 that has passed through the introduction pathway 50 is retained in the buffer tank 61 of the drainage water treatment device 60, water quality is improved via the water treatment device 62, and the water then flows as the circulated water a2 through the circulation pathway 70 after passing through the buffer tank 61. The circulated water a2 is fed in the circulation pathway 70 through driving of the circulation pump 72, and the circulated water a2 is cooled through the heat exchanger 36 and is then supplied to the supply pathway 20 through the valve 75.

The circulated water a2 supplied to the supply pathway 20 is used for purifying the exhaust gas g1 inside the scrubber 10 similarly to the exhaust gas washing water a1 in the open loop operation and is then introduced again into the introduction pathway 50. Therefore, the circulated water a2 flows through the closed pathway through which it flows in the order of the circulation pathway 70, the supply pathway 20, the scrubber 10, the introduction pathway 50, and the drainage water treatment device 60 and returns to the circulation pathway 70, and is circulated and used by repeating the purification of the exhaust gas g1 and the improvement in water quality.

In a case in which the closed loop operation is switched to the open loop operation, the valve 69 is opened. In this manner, the circulated water a2 used in the closed loop operation is released to the ocean through the pipe 68 and the discharge pathway 40.

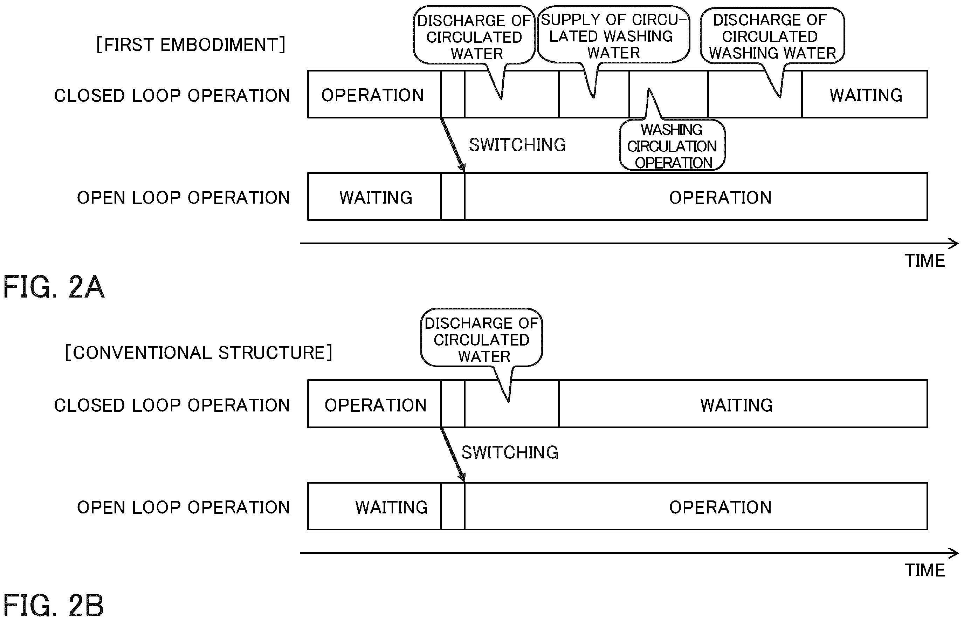

Figure 2A is a time chart at the time of operation switching according to the first embodiment. Figure 2B is a time chart similar to Figure 2A in the conventional structure. As illustrated in Figure 2A, the discharge of the circulated water a2 used in the closed loop operation and the start (restart) of the open loop operation are performed at substantially the same timings at the time of the switching from the closed loop operation to the open loop operation. Each pipe and device except for the supply pathway 20 and the scrubber 10 in the aforementioned pathway through which the circulated water a2 flows are brought into an empty state in which the circulated water a2 has been drained, through the discharge of the circulated water a2. Note that the valves 31 and 41 are opened, the valves 51 and 75 are blocked, and the seawater pump 33 is driven, with the start of the open loop operation.

Figure 3 is a configuration diagram similar to Figure 1 for explaining the pathway through which the circulated washing water flows. After the circulated water a2 is discharged, the circulated washing water a4 is supplied from the circulated washing water supply unit 53 as illustrated in Figure 3. Before the circulated washing water a4 is supplied, control is performed such that the valve 75 on the downstream side of the circulation pathway 70 and the valve 51 on the upstream side of the introduction pathway 50 are blocked and the valve 73 in the circulation pathway 70 and the valve 83 in the bypass pathway 80 are opened. Then, the closed pathway in which the circulated washing water a4 that has flowed in the order of the introduction pathway 50, the drainage water treatment device 60, and the circulation pathway 70 flows into the bypass pathway 80 and returns to the introduction pathway 50 is formed as illustrated by the pipe represented by the solid line in Figure 3.

After the circulated washing water a4 is supplied, the washing circulation operation (washing mode) is performed. In such a washing circulation operation, the circulated washing water a4 is pressure-fed by the circulation pump 72, and the circulated washing water a4 is circulated through the closed pathway illustrated in Figure 3. The circulated washing water a4 is different from the circulated water a2 used in the closed loop operation and is not used for desulfurization in the scrubber 10, and the closed pathway through which the circulated washing water a4 is circulated is thus washed through the circulation.

In the circulation of the circulated washing water a4, the quality of the circulated washing water a4 is improved in the drainage water treatment device 60 similarly to the aforementioned drainage water a3. Also, in the washing circulation operation, a detergent is supplied from the detergent supply unit 54 through the introduction pathway 50, and the effect that coagulating side products and soot are dissolved and removed with the circulated washing water a4 containing the detergent can be enhanced.

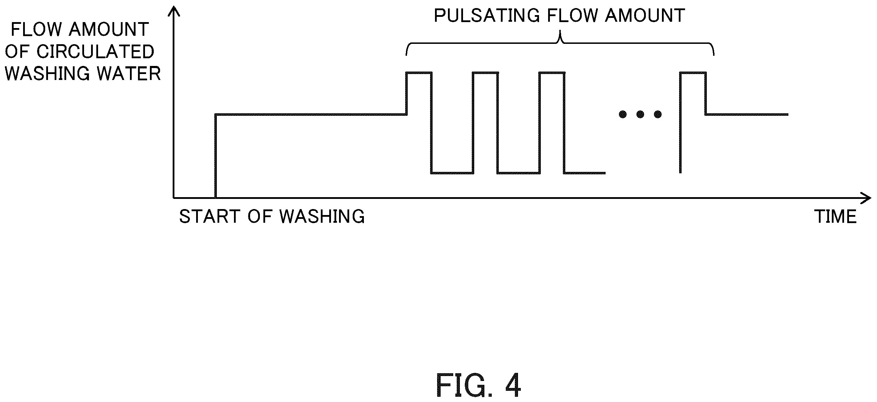

Figure 4 is a graph illustrating a relationship between the flow amount of the circulated washing water and a time. In the washing circulation operation, it is only necessary to compare the flow amount of the circulated washing water a4 with the ordinary flow amount in the closed loop operation and to perform control such that the pulsating flow amount in which a large flow amount and a small flow amount are alternately set is achieved, as illustrated in Figure 4. It is possible to apply a varying water pressure to the coagulating side products and soot and to enhance the effect of dissolving and removing them, by circulating the circulated washing water a4 with such a pulsating flow amount.

The control of the flow amount of the circulated washing water a4 in the washing circulation operation including the control to cause the circulated washing water a4 to have the pulsating flow amount is performed by the control device 90. In a case in which the valve 73 in the circulation pathway 70 and the valve 83 in the bypass pathway 80 are configured of opening degree adjusting valves, the control device 90 can form the pulsating flow amount by changing and adjusting the degrees of opening of the valves 73 and 83 at a predetermined cycle. Also, since the two valves 73 in the circulation pathway 70 and the three valves 83 in the bypass pathway 80 are connected in parallel, the control device 90 can form the pulsating flow amount by controlling the number of driven valves 73 and 83 to be connected in parallel. Moreover, in a case in which the circulation pump 72 includes an inverter mounted thereon, the control device 90 can form the pulsating flow amount by controlling the rotation frequency (output) of the circulation pump 72.

After the washing circulation operation, the circulated washing water a4 is discharged from the closed pathway through which the circulated washing water a4 has been circulated (see Figure 2A). For the discharging of the circulated washing water a4, the valve 69 is opened, and the circulated washing water a4 used in the washing circulation operation is released to the ocean through the pipe 68 and the discharge pathway 40. When the open loop operation is continued after the circulated washing water a4 is discharged, the configurations used only for the closed loop operation, such as the introduction pathway 50, the drainage water treatment device 60, and the circulation pathway 70 are brought into a waiting state.

According to such a first embodiment, the bypass pathway 80 is provided, and it is thus possible to form the closed pathway (see Figure 3) by the bypass pathway 80, the introduction pathway 50, the drainage water treatment device 60, and the circulation pathway 70. In this manner, it is possible to cause the circulated washing water a4 to flow through and wash such a closed pathway in the washing circulation operation.

Here, in comparison between the first embodiment and the conventional structure which does not include the bypass pathway 80, the waiting state is achieved after the circulated water is discharged when the closed loop operation ends as illustrated in Figure 2B in the conventional structure.

The circulated water used in the closed loop operation contains side products (sulfate ions, sodium or magnesium ions due to the alkali chemicals, and the like) generated by the desulfurization in the scrubber and soot particles at high concentration. Therefore, in a case in which the circulated water is drained from the configurations in the closed pathway used for the closed loop operation, a small amount of circulated water remaining therein is evaporated, and the side products and the soot are likely to precipitate and coagulate on the inner walls of the configurations such as pipes.

Further, since the operation time of the open loop operation is longer than that of the closed loop operation, a bonding force of the coagulating side products and soot increases, and it becomes difficult to remove them. If this is repeated, the inside of the configurations such as pipes may be clogged with the side products and the soot, and problems such as a decrease in flow amount of circulated water, an increase in pump energy, and the like in the closed loop operation may occur.

In this regard, according to the first embodiment, it is possible to wash the configurations used only for the closed loop operation, such as the circulation pathway 70 when the open loop operation is being performed after the closed loop operation is switched to the open loop operation as illustrated in Figure 2A. In this manner, it is possible to avoid remaining of the circulated water that contains the side products and the soot particles at high concentration and to prevent the side products and the soot from coagulating and causing cloggage inside the configurations such as pipes. As a result, it is possible to suppress a decrease in flow amount of the circulated water a2 and an energy loss of the circulation pump 72 that pressure-feeds the circulated water a2.

### [Second embodiment]

Next, a second embodiment of the present invention will be described. Note that in the following description, the same signs may be used for the same or similar components as those in the first embodiment, and the description may be omitted or simplified.

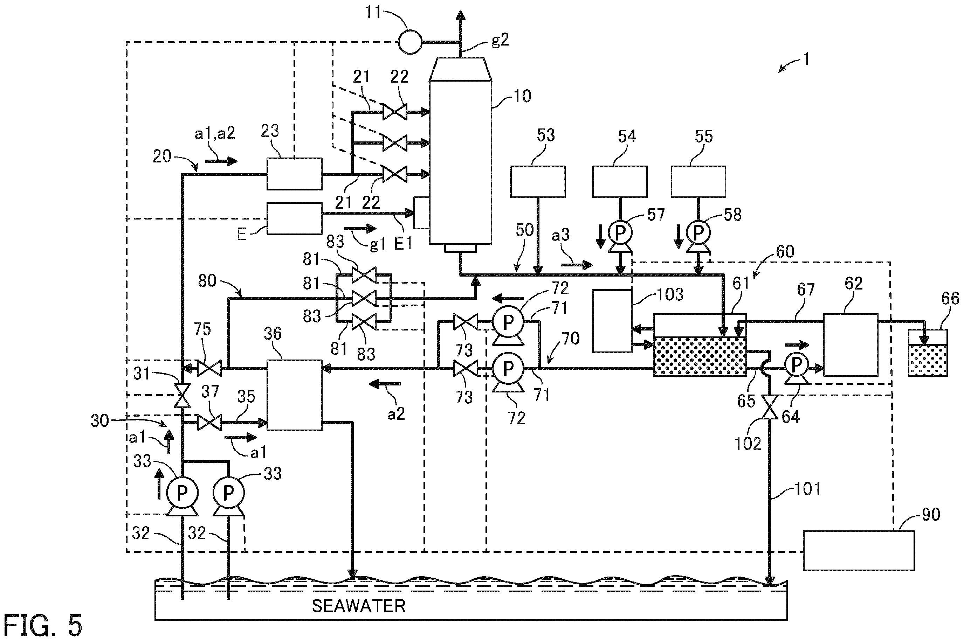

The second embodiment of the present invention will be described with reference to Figure 5. Figure 5 is an overview configuration diagram of an exhaust gas treatment apparatus according to the second embodiment. As illustrated in Figure 5, the discharge pathway 40 in the first embodiment is omitted, and a pipe (discharge pathway) 101 for releasing water to the ocean in a drainage water treatment device 60 is provided to be connected to a buffer tank 61, in the second embodiment.

A valve 102 is provided on the upstream side of the pipe 101, such that discharge and a stop of discharge of treated drainage water a3 to the ocean (outside the apparatus) can be switched through opening and closing of the valve 102. Here, the valve 102 configures a second switching unit. Note that in the second embodiment, pH and the like of the drainage water a3 retained in the buffer tank 61 is measured by a water quality meter 103.

In the second embodiment, it is possible to release the drainage water a3 to the ocean via the buffer tank 61 and the pipe 101 by opening the valve 102 in the open loop operation. Also, in the second embodiment, it is possible to perform the closed loop operation and the washing circulation operation similarly to the first embodiment. It is thus possible to prevent side products and soot coagulating on configurations used only for the closed loop operation, such as the circulation pathway 70, from remaining in the second embodiment as well.

Embodiments of the present invention are not limited to the aforementioned embodiments, and various changes, replacements, and modifications may be made without departing from the gist of the technical idea of the present invention. Moreover, the technical idea of the present invention may be implemented using methods of other developed techniques or derived techniques as long as it is possible to realize the technical idea by the methods. Therefore, the claims cover the entire embodiments that can be included within the scope of the technical idea of the present invention.

Although the first switching unit is configured of the two valves 31 and 75 in the above first and second embodiments, and the second switching unit is configured of the two valves 41 and 51 in the first embodiment, these may be changed to three-way valves instead.

Also, the numbers of the parallel pipes 71, the circulation pumps 72, the valves 73 mounted in the circulation pathway 70 and of the parallel pipes 81 and the valves 83 mounted in the bypass pathway 80 may be more or less as long as it is possible to form the aforementioned pulsating flow amount.

Also, as long as the circulated washing water supply unit 53 and the detergent supply unit 54 can wash the circulation pathway 70 and the like by using any one of the circulated washing water a4 and the detergent, the circulated washing water supply unit 53 or the detergent supply unit 54 that supplies the other one may be omitted.

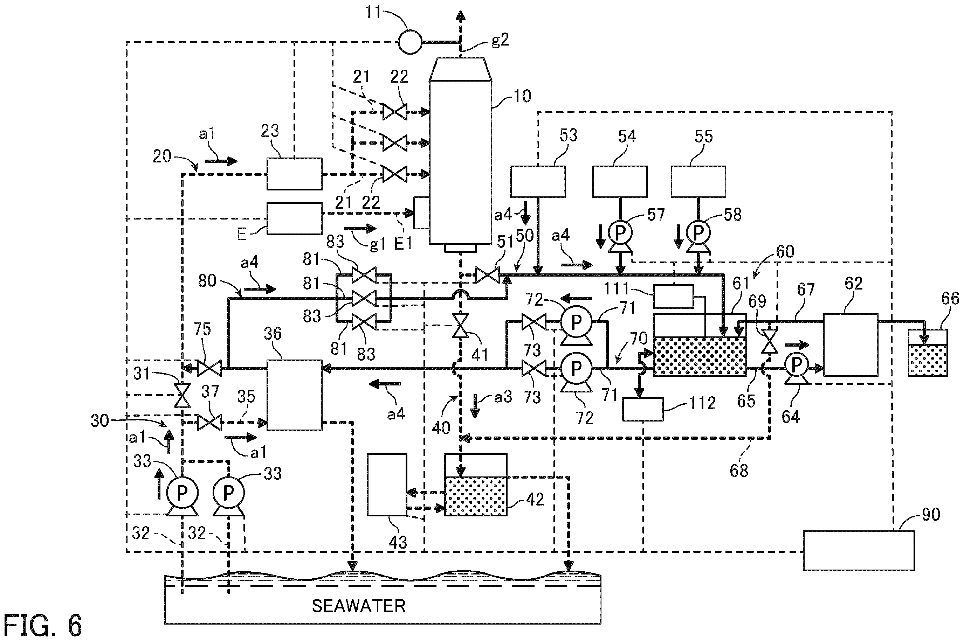

Additionally, a configuration in which a water gauge and a water quality detection unit are added may be adopted in each of the aforementioned embodiments. A first modification achieved by adding such a configuration to the first embodiment will be described below with reference to Figure 6. Figure 6 is a configuration diagram similar to Figure 3 for an exhaust gas treatment apparatus according to the first modification.

In the first modification, a water level gauge 111 and a water quality measurement unit 112 are provided in the buffer tank 61 of the drainage water treatment device 60. The water level gauge 111 measures the water level of the circulated washing water a4 retained in the buffer tank 61 and outputs the water level to the control device 90. The water quality measurement unit 112 measures water quality (turbidity, pH, PAH, and the like) of the circulated washing water a4 retained in the buffer tank 61 and outputs the water quality to the control device 90. Examples of the water quality measurement unit 112 include utilization of a turbidity meter or an MLSS meter that is a gauge for measuring turbidity or a PAH meter that measures contamination derived from MgO, soot, and the like in the circulated washing water a4 as well as contamination due to oil content, and it is more preferable to use both of them for the measurement.

When the circulated washing water a4 is supplied from the circulated washing water supply unit 53 to the closed pathway formed by the introduction pathway 50, the drainage water treatment device 60, the circulation pathway 70, and the bypass pathway 80 before the washing circulation operation is performed, the water level of the circulated washing water a4 in the buffer tank 61 is measured by the water level gauge 111. A measurement result of the water level gauge 111 is output to the control device 90. The control device 90 performs control of stopping the supply of the circulated washing water a4 from the circulated washing water supply unit 53 at a timing at which the water level in the buffer tank 61 satisfies a predetermined condition required for the washing circulation operation on the basis of the measurement result of the water level gauge 111.

Thereafter, the control device 90 controls the circulation pump 72 and causes the circulation pump 72 to pressure-feed and circulate the circulated washing water a4 through the closed pathway to start the washing circulation operation. The closed pathway is washed through the circulation of such circulated washing water a4. Moreover, the water quality of the circulated washing water a4 is improved by the drainage water treatment device 60, and water quality of the circulated washing water a4 inside the buffer tank 61 is measured by the water quality measurement unit 112, during the circulation of the circulated washing water a4. A result of measuring the circulated washing water a4 by the water quality measurement unit 112 is output to the control device 90.

The control device 90 controls the circulation of the circulated washing water a4 through the closed pathway via the driving control of the circulation pump 72 on the basis of the measurement result of the water quality measurement unit 112. For example, if turbidity of the circulated washing water a4 measured by the water quality measurement unit 112 is equal to or greater than a predetermined drainage water reference value, then the control device 90 performs control of continuing the circulation of the circulated washing water a4 by continuously driving the circulation pump 72. Also, the control device 90 performs control of stopping the driving of the circulation pump 72 at a timing at which the turbidity of the circulated washing water a4 becomes less than the predetermined drainage water reference value and stopping the circulation of the circulated washing water a4. In this manner, the washing circulation operation is completed, and the circulated washing water a4 is discharged from the closed pathway, through which the circulated washing water a4 has been circulated, in response to the completion.

Although the circulation and the stop thereof of the circulated washing water a4 are controlled by the control device 90 controlling the driving of the circulation pump 72 on the basis of the measurement result of the water quality measurement unit 112 in the above description, the present invention is not limited thereto. For example, the output of the circulation pump 72 may be changed to optimize the driving of the circulation pump 72 in accordance with the measurement result of the water quality measurement unit 112. Also, the circulation pump 72 may be manually stopped by an operator rather than the control performed by the control device 90 to stop the circulation of the circulated washing water a4 in the case in which the turbidity of the circulated washing water a4 measured by the water quality measurement unit 112 is less than the predetermined drainage water reference value.

According to such a first modification, the control device 90 can control the circulation of the circulated washing water a4 through the closed pathway on the basis of the measurement result of the water quality measurement unit 112. In this manner, it is possible to optimize the operation of the circulation pump 72 in accordance with the degree of washing of the closed pathway achieved by the circulated washing water a4 and to release the circulated washing water a4 to the ocean under a condition that the drainage water reference is met. Note that the water quality measurement unit 112 may perform measurement and the water level gauge 111 may perform measurement for the circulated water a2 and the drainage water a3 as well in the closed loop operation, similarly to the circulated washing water a4.

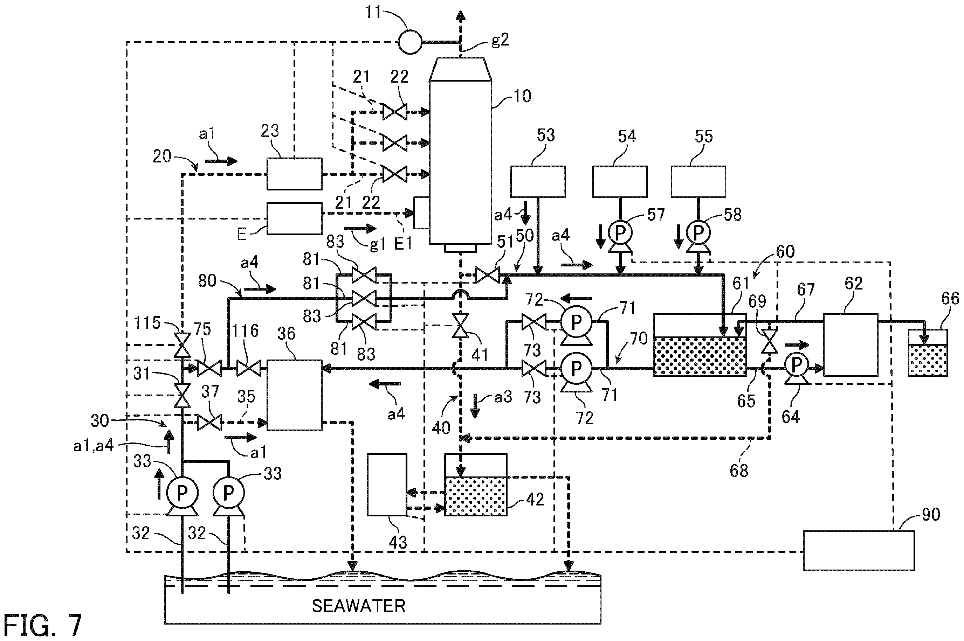

Figure 7 is a configuration diagram similar to Figure 3 for an exhaust gas treatment apparatus according to a second modification. Although the case in which the circulated washing water a4 is supplied from the circulated washing water supply unit 53 to the introduction pathway 50 when the washing circulation operation is performed is illustrated in Figure 3, any modification can be made as long as it is possible to supply the circulated washing water a4 to the closed pathway in the washing circulation operation. In an example, the circulated washing water a4 can be supplied as in the second modification in Figure 7.

As illustrated in Figure 7, a valve 115 is provided on the upstream side of the supply pathway 20 in the second modification. The circulation pathway 70 is connected between the valve 115 on the upstream side of the supply pathway 20 and the valve 31 between the water supply pathway 30 and the supply pathway 20. The circulation pathway 70 is further provided with a valve 116. The bypass pathway 80 is caused to communicate between the two valves 75 and 116 with the circulation pathway 70. The valve 116 of the circulation pathway 70 is provided in the vicinity of the position where the bypass pathway 80 communicates with the circulation pathway 70.

Seawater from the water supply pathway 30 is supplied as the exhaust gas washing water a1 to the supply pathway 20 by blocking the valve 75 in the circulation pathway 70 while opening the valve 115 on the upstream side of the supply pathway 20 in a state in which the valve 31 between the water supply pathway 30 and the supply pathway 20 is opened. On the other hand, the seawater (exhaust gas washing water a1) from the water supply pathway 30 is supplied as the circulated washing water a4 to the bypass pathway 80 via the circulation pathway 70 by opening the valve 75 in the circulation pathway 70 while blocking the valve 115 on the upstream side of the supply pathway 20 and the valve 116 in the circulation pathway 70. Note that a state in which the valve 75 in the circulation pathway 70 is blocked and the valve 116 in the circulation pathway 70 is opened is achieved before the washing circulation operation is started after the supply of the circulated washing water a4 is completed.

As described above, it is possible to perform switching between the supply of the exhaust gas washing water a1 to the supply pathway 20 and the supply of the circulated washing water a4 to the closed pathway in the washing circulation operation including the bypass pathway 80 with the tree valves 75, 115, and 116. Here, the circulation washing water supply unit 53 can be configured to include the three valves 75, 115, and 116. The circulated washing water supply unit 53 according to the second modification can have a simple configuration achieved merely by adding the two valves 115 and 116 to the first embodiment and can have a configuration using the circulation pathway 70 that is to be used for the closed loop operation. It is thus possible to simplify the entire exhaust gas treatment apparatus 1 and to reduce the apparatus cost. Note that although the second modification in Figure 7 has a configuration achieved by adding the valves 115 and 116 to the configuration in the first embodiment, the valves 115 and 116 may be similarly added to the first modification and the second embodiment.

In each embodiment and each modification, the water treatment device 62 in the drainage water treatment device 60 may improve water quality of the circulated water a2 without discharging the circulated water a2 used in the closed loop operation, and the circulated water a2 may then be circulated as the circulated washing water a4 in the washing circulation operation. In this manner, "discharge of the circulated water" and "supply of the circulated washing water" in the time chart in Figure 2A can be omitted, and it is thus possible to shorten the time in the stage before the washing circulation operation.

Also, although the washing circulation operation and processes before and after it are performed when the open loop operation is being performed according to the time chart in Figure 2A, the present invention is not limited thereto. For example, the washing circulation operation and the processes before and after it may be performed in a state in which both the closed loop operation and the open loop operation are stopped.

The present application is based on Japanese Patent Application No. 2020-148843 filed on September 4, 2020. The entire content thereof is incorporated herein.

## Claims

1. An exhaust gas treatment apparatus comprising:
a scrubber that brings a sulfur oxide contained in exhaust gas into contact with exhaust gas washing water, purifies the exhaust gas to obtain purified gas, and obtains, as drainage water, the exhaust gas washing water which has absorbed the sulfur oxide;
a supply pathway that supplies the exhaust gas washing water to the scrubber;
a water supply pathway that supplies the exhaust gas washing water from outside of the apparatus to the supply pathway;
an introduction pathway into which the drainage water from the scrubber is introduced;
a drainage water treatment device that performs a predetermined treatment on the drainage water from the introduction pathway;
a circulation pathway that supplies, as circulated water, the drainage water treated by the drainage water treatment device to the supply pathway;
a discharge pathway that is for discharging the drainage water to the outside of the apparatus;
a first switching unit that performs switching between supply of the exhaust gas washing water from the water supply pathway and supply of the circulated water from the circulation pathway for the supply pathway; and
a second switching unit that switches a flow of the drainage water to the outside of the apparatus in the discharge pathway,
wherein the apparatus further includes a bypass pathway that is caused to communicate with a side further upstream than the first switching unit in the circulation pathway and an upstream side of the introduction pathway, such that circulated washing water flows therethrough.

2. The exhaust gas treatment apparatus according to claim 1, further comprising:
a circulated washing water supply unit that supplies the circulated washing water to the introduction pathway.

3. The exhaust gas treatment apparatus according to claim 1 or 2, further comprising:
a detergent supply unit that supplies a detergent to the introduction pathway.

4. The exhaust gas treatment apparatus according to any one of claims 1 to 3, comprising:
a control device that controls a flow amount of the circulated washing water in a closed pathway formed by the introduction pathway, the drainage water treatment device, the circulation pathway, and the bypass pathway.

5. The exhaust gas treatment apparatus according to claim 4,
wherein at least one of the bypass pathway and the circulation pathway includes a plurality of parallel pipes branched at an intermediate position and then combined and valves, each of which is provided in each of the plurality of parallel pipes, and
the control device controls the number of valves to be driven such that the flow amount of the circulated washing water becomes a pulsating flow amount.

6. The exhaust gas treatment apparatus according to claim 4,
wherein at least one of the bypass pathway and the circulation pathway includes a valve at an intermediate position, and
the control device adjusts a degree of opening of the valve such that the flow amount of the circulated washing water becomes a pulsating flow amount.

7. The exhaust gas treatment apparatus according to any one of claims 4 to 6,
wherein at least one of the bypass pathway and the circulation pathway includes, at an intermediate position, a circulation pump with an inverter mounted thereon, and
the control device controls an output of the circulation pump via the inverter such that the flow amount of the circulated washing water becomes a pulsating flow amount.

8. The exhaust gas treatment apparatus according to any one of claims 4 to 7, comprising:
a water quality measurement unit that measures water quality of the circulated washing water in the closed pathway,
wherein the control device controls circulation of the circulated washing water in the closed pathway on the basis of a measurement result of the water quality measurement unit.

9. An exhaust gas treatment method for the exhaust gas treatment apparatus according to any one of claims 1 to 8, the method comprising:
performing a closed loop operation of purifying exhaust gas with the scrubber in a state in which the circulated water is supplied from the circulation pathway to the supply pathway via the first switching unit and a flow of the drainage water to the outside of the apparatus in the discharge pathway is stopped via the second switching unit; and
performing a washing circulation operation of circulating the circulated washing water in the closed pathway formed by the bypass pathway, the introduction pathway, the drainage water treatment device, and the circulation pathway after the closed loop operation is performed.

10. The exhaust gas treatment method for the exhaust gas treatment apparatus according to claim 9, further comprising:
performing an open loop operation of purifying the exhaust gas with the scrubber by supplying the exhaust gas washing water from the water supply pathway to the supply pathway via the first switching unit and causing the drainage water in the discharge pathway to flow to the outside of the apparatus via the second switching unit, the closed loop operation and the open loop operation being performed in a switched manner,
wherein the washing circulation operation is performed when the open loop operation is being performed.

11. The exhaust gas treatment method for the exhaust gas treatment apparatus according to claim 10, wherein the washing circulation operation is performed in a state in which the closed loop operation and the open loop operation are stopped.

12. The exhaust gas treatment method for the exhaust gas treatment apparatus according to any one of claims 9 to 11, wherein in the washing circulation operation, the circulated water used in the closed loop operation is circulated as the circulated washing water.
